# EUROPÄISCHE PATENTSCHRIFT

(11) **EP 2 794 439 B1**
(45) Veröffentlichungstag und Bekanntmachung des Hinweises auf die Patenterteilung: **06.04.2016**
(21) Anmeldenummer: 12809816.7
(22) Anmeldetag: 20.12.2012
(51) Int. Cl.: B65G 59/02, B65G 59/04

(54) **ENTPALETTIERSYSTEM UND ENTNAHMEEINHEIT**
DEPALLETIZING SYSTEM AND REMOVAL UNIT
SYSTÈME DE DÉPALETTISATION ET UNITÉ DE PRÉLÈVEMENT

(30) Priorität: 20.12.2011 DE 102011056682
(43) Veröffentlichungstag der Anmeldung: 29.10.2014
(73) Patentinhaber: Brandmüller, Ludwig, 83026 Rosenheim (DE); Fellner, Herbert, 83059 Kolbermoor (DE)
(72) Erfinder: Brandmüller, Ludwig, 83026 Rosenheim (DE); Fellner, Herbert, 83059 Kolbermoor (DE)
(74) Vertreter: Winter, Brandl, Fürniss, Hübner, Röss, Kaiser, Polte - Partnerschaft mbB
(86) Internationale Anmeldenummer: PCT/EP2012/076491
(87) Internationale Veröffentlichungsnummer: WO 2013/092915

(56) Entgegenhaltungen:
- EP-A1- 0 354 873
- EP-A2- 0 742 166
- GB-A- 2 168 024
- JP-A- 2004 203 621
- US-A- 3 917 082
- US-A- 4 753 564

## Beschreibung

Die Erfindung betrifft ein Entpalettiersystem für eine Vielzahl von auf einer Palette lagenweise gestapelten Produkten gemäß dem Oberbegriff des Patentanspruchs 1 und eine Entnahmeeinheit nach Anspruch 16.

Insbesondere bei großen Handelsketten und Discountern ist für die Verteilung der Waren auf ihre Verkaufszentren, -filialen ein enormer Logistikaufwand erforderlich. Dabei werden häufig in großen Verteilzentren mit entsprechenden Hochregallagern die sortenreinen Produkte in großer Menge auf sogenannten Kundentrays zwischengelagert. Diese Produkte werden jedoch herstellerseitig auf Herstellerpaletten lagenweise sortenrein an das Verteilzentrum angeliefert - für die Zwischenlagerung ist es dann erforderlich, die sortenreinen Paletten lagenweise zu entpalettieren.

Diese Entpalettierung der sortenreinen Produkte gestaltet sich deutlich schwieriger als das herstellerseitige Palettieren, da durch die unterschiedlichen Formen, Größen, Gewichte und Oberflächenstrukturen sowie die unterschiedlichen Umverpackungen (Trays, Kartons, Folien, Papier ...) bisher noch in großem Umfang eine Entpalettierung von Hand und dabei ein enormer Personalaufwand erforderlich ist. Das Personal wird durch diese Hand-Entpalettierung auch im Laufe der Schichten gesundheitlich sehr stark belastet, wobei vom Gesetzgeber die maximal während einer Schicht zu hebende Gesamtlast auf 3000 kg/Person beschränkt ist.

Um diesen Personalaufwand zu minimieren, ist in der EP 1 890 054 B1 eine robotergestützte Lösung offenbart, bei der zum Entpalettieren eine Entnahmeeinheit mit zwei Walzen seitlich an einer anzuhebenden Lage der auf der Palette angeordneten Produkte/Gebinde reibschlüssig angreift und diese anhebt und dann von diesen Seiten her zwei Tragböden einfährt, so dass die angehobene Lage abgestützt ist. Diese Lage wird dann auf das genannte Kundentray verbracht und im Hochregal sortenrein zwischengelagert.

Nachteilig bei dieser bekannten Lösung ist, dass manche Produktlagen nicht stabil genug sind, dass sie seitlich reibschlüssig angehoben werden, da beispielsweise die Produkte selbst oder die Umverpackung beim Ansetzen der Walzen deformiert wird. In diesem Fall muss wieder auf die eingangs beschriebene Hand-Entpallettierung zurückgegriffen werden.

In der US 5,265,712 wird ein ähnliches System beschrieben, bei der das Anheben nicht durch Walzen sondern durch eine sogenannte "Messerkante" erfolgt, bei der ein Band eine Rollenanordnung umschlingt und stirnseitig einen im Durchmesser kleine Umlenkrolle hat. Diese Stirnseite greift - ähnlich wie beim zuvor beschriebenen Ausführungsbeispiel - seitlich an der anzuhebende Lage an, so dass diese über das umlaufende Band angehoben wird, und die Messerkante dann unter die Lage einfahren kann, um diese anzuheben.

Eine derartige Anordnung weist die gleichen Nachteile wie die zuvor beschriebene Roboterlösung auf.

In der Druckschrift US 3 917 082 ist ein Entpalettiersystem offenbart, bei dem eine reibschlüssig wirkende Entnahmeeinheit und eine Vakuumentnahmeeinheit gemeinsam an einer anzuhebenden Lage angreifen.

Ein derartiges Entpalettiersystem ist jedoch nur für Produkt / Gebindeformen geeignet, die sowohl mittels einer Vakuumentnahmeeinheit als auch mit einer reibschlüssig wirkenden Entnahmeeinheit angehoben werden können.

Demgegenüber liegt der Erfindung die Aufgabe zugrunde, ein Entpalettiersystem und eine dafür geeignete Entnahmeeinheit zu schaffen, mit denen unterschiedliche Produkte zuverlässig entpalettiert werden können.

Diese Aufgabe wird mit den Merkmalen des Patentanspruchs 1 gelöst.

Vorteilhafte Weiterbildungen der Erfindung sind Gegenstand der Unteransprüche.

Das erfindungsgemäße Entpalettiersystem für eine Vielzahl von auf einer Palette lagenweise gestapelte Produkte hat eine reibschlüssige Entnahmeeinheit, über die an eine Lage der Produkte seitlich zumindest ein Reibelement ansetzbar ist, um die Lage anzuheben, so dass zumindest ein Tragboden einfahrbar ist. Das erfindungsgemäße Entpalettiersystem hat darüber hinaus eine Vakuumentnahmeeinheit, über die ebenfalls eine Lage der Produkte anhebbar ist. Des Weiteren vorgesehen ist eine zentrale Steuereinheit, die derart ausgelegt ist, dass die reibschlüssig wirkende Entnahmeeinheit und die Vakuumentnahmeeinheit alternativ, je nach Produkteigenschaft ansteuerbar ist.

Das heißt, beim erfindungsgemäßen System kann je nach Produkteigenschaft entweder das reibschlüssig wirksame Entnahmesystem oder die Vakuumentnahmeeinheit oder beide zusammen verwendet werden, um eine Produktlage vom Stapel abzuheben - dadurch lassen sich unterschiedlichste Gebinde, weitestgehend unabhängig von den Eigenschaften der eigentlichen Produkte oder deren Umverpackung entpalettisieren, so dass der personelle Aufwand gegenüber herkömmlichen Lösung deutlich verringert ist. Da beide Entnahmeeinheiten in das Entpalettiersystem integriert sind, ist auch der vorrichtungstechnische Aufwand und der erforderliche Bauraum minimal.

Bei einer alternativen Lösung ist das Entpalettiersystem mit einer Vorzentriereinheit ausgeführt, über die der angelieferte entfolierte Stapel nach der Anlieferung vom Hersteller zunächst lagezentriert wird - diese Vorzentriereinheit wird ebenfalls produktabhängig über die genannte Steuereinheit angesteuert. Dies ist erforderlich, da herstellerseitig unterschiedliche Palettendimensionen verwendet werden und darüber hinaus die Produkte nicht immer fluchtend zur Palettengrundfläche gestapelt sind, sondern entweder überstehen oder aber nicht die gesamte Palettenfläche ausfüllen.

Bei einem Ausführungsbeispiel der Erfindung ist zusätzlich noch ein Heber zum Abnehmen von Zwischen- oder Decklagen vom Stapel und zum Verbringen dieser Zwischen- oder Decklagen in eine Ausgabestation vorgesehen. Bei den eingangs beschriebenen Lösungen ist es erforderlich, derartige Zwischen- oder Decklagen von Hand abzunehmen - mit der oben genannten erfindungsgemäßen Maßnahme kann dieser Anteil der Handarbeit entfallen.

Dabei können die Zwischen- oder Decklagen einem Zwischenlagenspeicher zugeführt werden oder direkt aus dem Entpalettiersystem ausgebracht werden.

Der Heber zur Entnahme der Zwischen- oder Decklagen ist vorzugsweise als Vakuumheber alternativ mit mechanischer Greifvorrichtung ausgeführt.

Bei einem Ausführungsbeispiel der Erfindung erfolgt die Anlieferung der herstellerseitig palettierten Paletten in einer ersten Zuführebene. Nach dem Entfolieren der Paletten werden diese dann erfindungsgemäß über einen in das Entpalettiersystem integrierten Palettenlift in eine zweite, darüber liegende Ebene gefördert und dort über die beschriebenen Einheiten entpalettiert. Der Plattenlift wird zum Verbringen der Lage in die Entnahmeebene von der Steuereinheit angesteuert.

Um eine Deformation des Stapels oder der Paletten während dieses Anhebens zu vermeiden, kann der Palettenlift mit Stützstempeln versehen sein, die von unten her durch die Palette hindurch deren Deckbretter und damit den Produktstapel abstützen.

Das Entpalettieren kann besonders exakt erfolgen, wenn im Bereich der Entnahmeeinheiten eine Lagenzentrierung vorgesehen ist, über die beim Anheben einer Lage die darunter liegende, auf dem Stapel verbleibende Lage zentriert und/oder gehalten wird, um ein versehentliches Verschieben dieser Lage zu verhindern.

Dabei kann die Steuereinheit so ausgelegt sein, dass die Haltekraft produktabhängig gesteuert wird.

Erfindungsgemäß wird es bevorzugt, wenn das Entpalettiersystem mit einer Kundentray Zuführ- und Abführstation ausgeführt ist, über die leere Trays zuführbar sind, auf die die angehobene Lage abgelegt werden kann.

Bei einem sehr kompakt bauenden Ausführungsbeispiel sind die reibschlüssig wirkende Entnahmeeinheit, die Vakuumentnahmeeinheit und/oder der Heber oberhalb der Vorzentriereinheit angeordnet.

Dabei kann die reibschlüssig wirkende Entnahmeeinheit in Schwerkraftrichtung unterhalb der Vakuumentnahmeeinheit oder unterhalb des Hebers angeordnet sein.

Bei einem Ausführungsbeispiel sind die Vakuumentnahmeeinheit und der Heber in Parallelrichtung verfahrbar am Entpalettiersystem gelagert.

Da die Trennebene zwischenbenachbarten Lagen produktabhängig variiert, kann zur Erfassung dieser Trennebene ein geeigneter Sensor, beispielsweise eine Kamera oder dergleichen vorgesehen werden, deren Signal zur Steuerung der vorbeschriebenen Einheiten über die Steuereinheit verarbeitet wird.

Zur Vereinfachung der Vereinzelung der Zwischenlagen kann eine Abblaseinrichtung mit zumindest einer Pressluftdüse und ggf. mit einem Saugkopf vorgesehen werden, über den die abgeblasene Zwischenlage abführbar ist.

Die Relativpositionierung der abzunehmenden Produktlage kann über Abtastklappen vereinfacht werden, die beim Anheben der Quellpalette verschwenkt werden und somit einen Rückschluss auf die Hubposition ermöglichen. Diese Abtastklappen können mit Doppelfunktion ausgeführt sein, in dem sie im verschwenkten Zustand die seitliche Führung des Produktstapels erleichtern oder übernehmen.

Das zumindest eine Reibelement der Entnahmeeinheit kann als Reibwalze oder Messerkante ausgeführt sein, dabei kann dieses Reibelement einseitig oder beidseitig an der anzuhebenden Lage angreifen. Die erfindungsgemäße Entnahmeeinheit ist als "Messerkante" ausgeführt, bei der zumindest ein Band ein Antriebsritzel und eine Umlenkung umschlingt, wobei ein Umlenkungsbereich dieses Bandes in Anlage an das zu vereinzelnde Gut gebracht wird und dann durch entsprechende Ansteuerung des Bandes die Zwischenlage angehoben wird, so dass die Entnahmeeinheit mit der Messerkante unter die Produktlage einfahren und angehoben werden kann. Unter dem Begriff "Messerkante" wird eine Förder- / Hebeeinrichtung verstanden, bei der ein Endlosband / Riemen ein Antriebselement und eine Umlenkung umschlingt. Das Antriebselement kann ein Antriebsritzel sein, das reib- oder formschlüssig (Zahnriemen) in Wirkverbindung mit dem Riemen / Band steht. Der Umlenkdurchmesser ist vorzugsweise etwas kleiner als der Antriebselementdurchmesser gewählt.

Dieses Band und das entsprechende Antriebsritzel können mit einer zahnriemenartigen Profilierung versehen sein, so dass ein sehr hohes Antriebsmoment ohne Schlupf übertragbar ist.

Gemäß einer Variante der Erfindung erfolgt die Umlenkung des Bands der "Messerkante" nicht über eine Rolle, sondern über ein nicht drehbares Profil. Dieses Profil ist derart konstruiert, dass die Umlenkung reibungsminimiert erfolgt. Durch die Verwendung eines nicht beweglichen Umlenkprofils wird erfindungsgemäß eine deutlich höhere Stabilität an der Aufrollkante und somit eine deutliche Funktionsverbesserung bei der Aufrollfunktion gegenüber den herkömmlichen Messerkanten mit Umlenkrollen bewirkt. Anstelle dieses Profils kann prinzipiell jedoch auch eine herkömmliche Umlenkrolle verwendet werden.

Bevorzugte Ausführungsbeispiele der Erfindung werden im Folgenden anhand schematischer Zeichnungen näher erläutert.

Es zeigen:
Figur 1 eine dreidimensionale Darstellung eines Ausführungsbeispiels eines Entpalettiersystems;
Figur 2 einen Palettenlift des Entpalettiersystems aus Figur 1;
Figur 3 eine vergrößerte Darstellung eines Teilbereichs des Entpalettiersystems gemäß Figur 1;
Figur 4 eine nochmals vergrößerte Darstellung einer Entnahmeeinheit und eines Vakuumhebers des Entpalettiersystems;
Figur 5 ein alternatives Ausführungsbeispiel eines Entpalettiersystems;
Figur 6 das Entpalettiersystem beim Abheben einer Lage;
Figur 7 das Einfahren eines Kundentrays unter die abgehobene Lage;
Figur 8 das Ablegen der Lagen auf das Kundentray;
Figuren 9 und 10 die Übergabe des beladenen Kundentrays an eine Abführstation;
Figur 11 das Entpalettiersystem in einem Zustand, in den eine Lage mittels einer Vakuumentnahmeeinheit angehoben wird;
Figur 12 die mittels der Vakuumentnahmeeinheit angehobene Lage bei eingefahrenen Tragböden;
Figur 13 das Ablegen der mittels der Vakuumentnahmeeinheit abgenommenen Lage auf einem Kundentray;
Figur 14 eine Variante des in Figur 5 dargestellten Ausführungsbeispiels;
Figur 15 ein weiteres Ausführungsbeispiel einer Entnahmeeinheit mit Messerkante;
Figur 16 eine Einrichtung zum Niederhalten einer Zwischenlage;
Figuren 17a, b Einzeldarstellungen der Entnahmeeinheit mit Messerkante;
Figur 18 ein Ausführungsbeispiel mit einer Abblaseinrichtung und
Figur 19 ein Ausführungsbeispiel mit einer Abtastklappe.

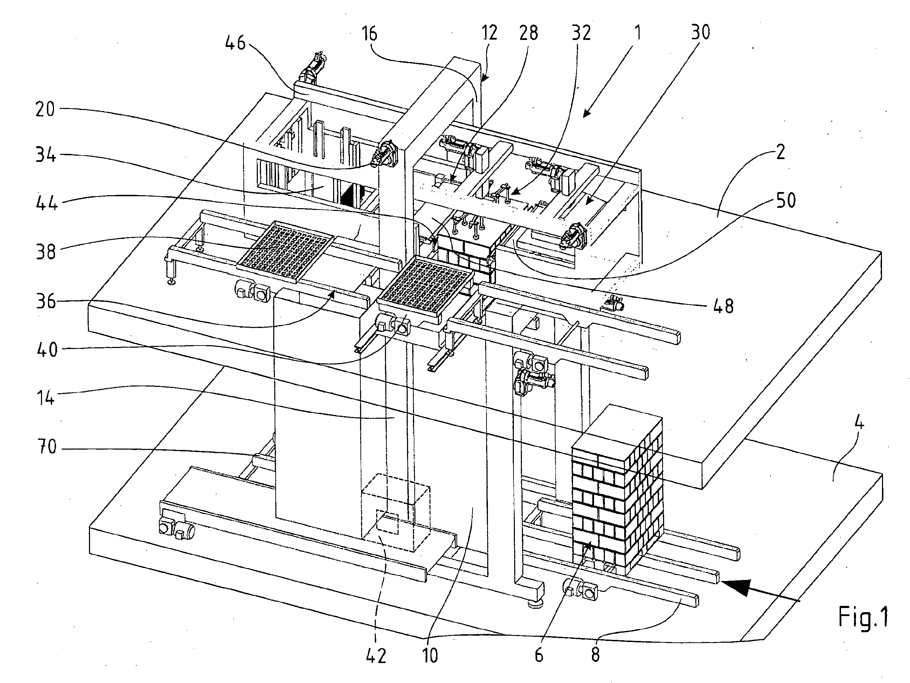

Gemäß der Darstellung in Figur 1 erstreckt sich das erfindungsgemäße Entpalettiersystem 1 über zwei Ebenen 2, 4, wobei die Zuführung einer sortenreine Produkte aufnehmenden Palette 6 vollautomatisch über eine Palettentransporteinrichtung 8 erfolgt.

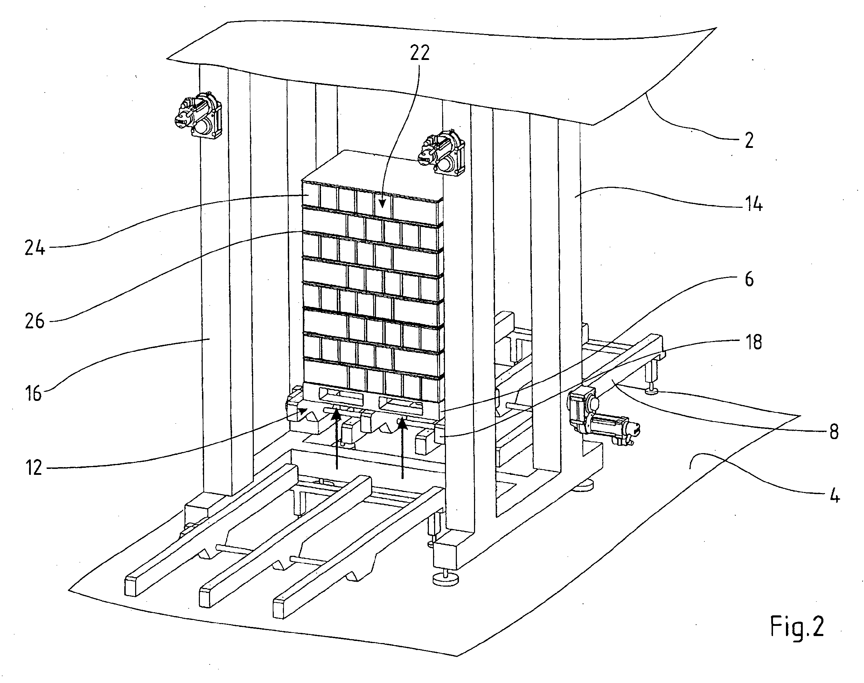

Die entfolierte Palette 6 wird dann einer Vorzentriereinheit 10 zugeführt, die beim dargestellten Ausführungsbeispiel als Schachtzentrierung ausgeführt ist und die Palette 6 bei Erreichen einer vorbestimmten Endposition vorzugsweise von drei Seiten, alternativ auch von vier Seiten, dass heißt auch von der Zuführrichtung her, umgreift, so dass der Produktstapel auf der Palette 6 lagezentriert ist. Mit einem in Figur 2 angedeuteten Palettenlift 12 wird die vorzentrierte Vollpalette 8 dann in Vertikalrichtung angehoben und in die Ebene 2 gefördert. Das Entpalettiersystem hat dabei zwei Vertikalkonsolen 14, 16, die von einem Portal überdeckt sind und zwischen denen ein Palettenträger 18 geführt ist, der über einen Servoantrieb 20 (siehe Figur 1) angetrieben ist.

Um ein Durchbiegen und damit eine Deformation des auf der Palette 8 angeordneten Produktstapels 22 zu vermeiden, kann der Palettenträger 18 mit Stützstempeln (nicht dargestellt) ausgebildet sein, die entweder die Palette von unten her oder durch die Palette 6 den Stapel 22 in Pfeilrichtung (Figur 2) abstützen, so dass der Produktstapel 22 in seiner vorzentrierten Position verbleibt. In der Darstellung gemäß Figur 2 sieht man deutlich den Aufbau des Produktstapels 22, wobei dieser nur Produkte einer Art enthält, wobei zwischen den durch die Produkte gebildeten Lagen Zwischen- oder Decklagen 26 ausgebildet sind, die entweder als Einmalprodukt oder auch wieder verwertbar ausgeführt sein können.

Im Bereich der oberen Ebene 2 hat das Entpalettiersystem 1 gemäß Figur 1 eine im Folgenden noch näher erläuterte reibschlüssig wirkende Entnahmeeinheit 28, zum Anheben einer Lage 24 vom Stapel 22. Das Entpalettiersystem 1 hat des Weiteren eine Vakuumentnahmeeinheit 30, über die leichte, weiche oder empfindliche Produkte entpalettiert werden können. Eine derartige Vakuumentnahmeeinheit ist nicht geeignet für schwere Produkte, wie beispielsweise mit Getränken gefüllte Kartons, da diese beim Anheben über die Vakuumentnahmeeinheit reißen können.

Zusätzlich zu dieser Vakuumentnahmeeinheit 30 und der Entnahmeeinheit 28 hat das Entpalettiersystem 1 einen Vakuumheber 32, über den die oben beschriebenen Zwischenlagen von der jeweils abzunehmenden Lage 24 abgenommen werden können. Bei dem in Figur 1 dargestellten Ausführungsbeispiel werden die vom Vakuumheber 32 abgenommenen Zwischenlagen 26 einem Zwischenlagenspeicher 34 zugeführt und dort gestapelt. Dieser Stapel kann dann entnommen und einer Wiederverwendung zugeführt werden.

Bei ungünstigen Bedingungen kann es vorkommen, dass beim Abheben einer Lage 24 die darunter liegende Zwischenlage 26 anhaftet und mit abgenommen wird. Um dies zu vermeiden, kann bei der erfindungsgemäßen Vorrichtung eine Nieder-/Rückhaltevorrichtung vorgesehen sein, über die die Zwischenlage auf der nächsten darunter liegenden Lage gehalten wird. Dies kann beispielsweise über Greiffinger erfolgen, die seitlich über der Lagenzentrierung angeordnet sind und die Zwischenlage bis zu deren Entnahme zurückhalten. Dadurch kann vermieden werden, dass eine Zwischenlage zwischen Kundentray und abgerollter bzw. abgesaugter Lage 24 platziert ist. Die Nieder-/Rückhaltevorrichtung ist in dem beschriebenen Ausführungsbeispielen nicht gezeigt.

Das Entpalettiersystem 1 hat des Weiteren eine Entladestation 36, die ebenfalls über Servomotoren angetrieben wird und über die Kundentrays 38 einen mit einem Servomotor angetriebenen Verschiebewagen 40 zugeführt werden können. Auf diesem Kundentray 38 wird dann - wie im Folgenden näher erläutert - die angehobene Lage 24 abgelegt und dann über die Entladestation 36 zum Hochregal oder zur Zwischenlagerung gefördert.

Der Antrieb der vorbeschriebenen Einheiten erfolgt jeweils über Servomotoren, die über eine gestrichelt angedeutete Steuereinheit 40 angesteuert werden.

Um eine unerwünschte Verschiebung des Produktstapels während des Anhebens der oberen Lage zu vermeiden, ist das Entpalettiersystem 1 des Weiteren mit einer Lagenzentrierung 44 ausgeführt, über die die unterhalb der anzuhebenden Lage angeordnete Lage 24 zentriert und gehalten wird.

Gemäß der Darstellung in Figur 1 sind der Vakuumheber 32 und die Vakuumentnahmeeinheit 30 parallel zueinander entlang einer Parallelführung 46 geführt, die ein Portal des Palettenlifts 12 durchsetzt und quer zu diesem angeordnet ist. Die Vakuumentnahmeeinheit 30 und der Vakuumheber 32 sind über Laufwagen an der Parallelführung 40 geführt.

Die reibschlüssig wirkende Entnahmeeinheit 28 ist unterhalb der Vakuumentnahmeeinheit 30 und der des Vakuumhebers 32 angeordnet.

Das Entpalletiersystem 1 hat des Weiteren zwei seitlich einfahrbare Tragböden 48, 50, die zum Abstützen der angehobenen Lage 24 unter diese einfahrbar sind und über die die Lage 24 dann an das über den Verschiebewagen 40 eingefahrene Kundentray 38 übergeben werden kann.

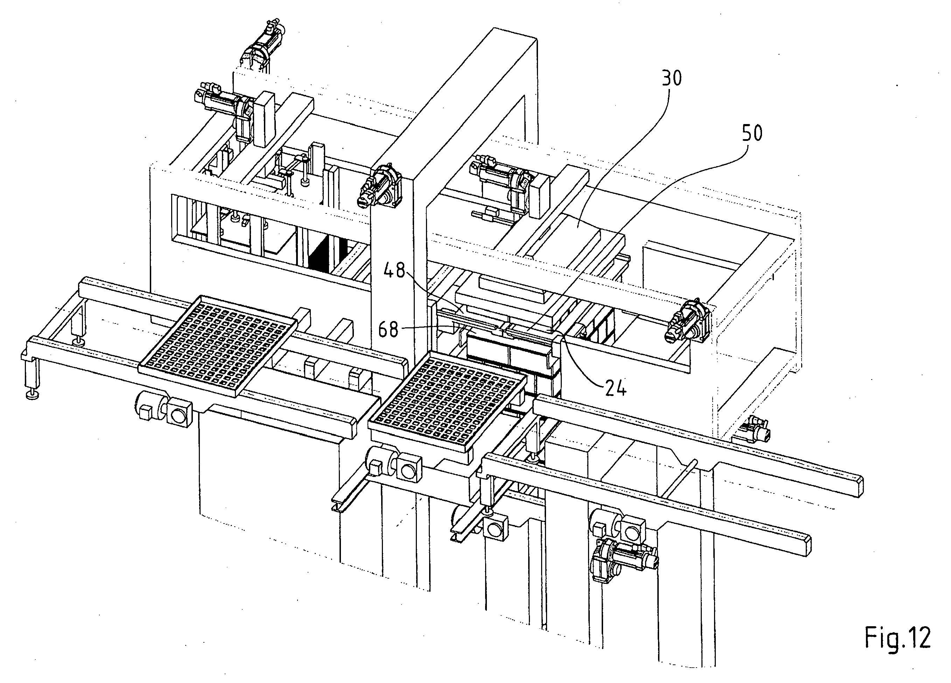

Die vollautomatische Entpalettierung wird nunmehr anhand der Figuren 1 bis 13 erläutert, wobei alle Funktionen über die Steuereinheit 42 gesteuert sind - ein manueller Eingriff ist allenfalls im Störfall erforderlich.

Die vom Hersteller angelieferte sortenreine Palette wird in der unteren Ebene 4 angeliefert und über die Palettentransporteinrichtung 8 der Vorzentriereinheit 10 zugeführt, wobei der Palettenstapel entfoliert ist. Die vorzentrierte beladene Palette 6 wird dann über den Palettenlift 12 gemäß Figur 2 angehoben, wobei der Palettenträger 18 entlang der Vertikalkonsolen 14, 16 geführt ist. Diese sind gemäß der Darstellung in Figur 1 oberhalb der Parallelführung 46 vom Portal übergriffen.

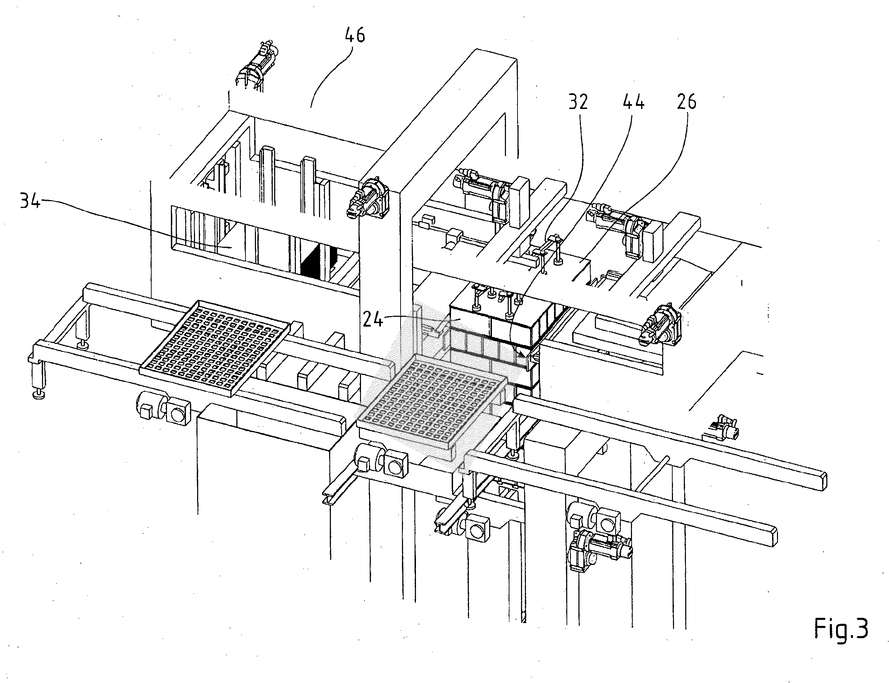

Nach dem Verfahren des Produktstapels 22 in die Ebene 2 schließt gemäß der Darstellung in Figur 3 die Lagenzentrierung 44, so dass die unterhalb der abzunehmenden Lage 24 angeordnete Lage zentriert und gehalten wird. Über den Vakuumheber 32 wird dann die Zwischenlage 26 abgehoben und entlang der Parallelführung 46 zum Zwischenlagenspeicher 34 verfahren und dort gestapelt.

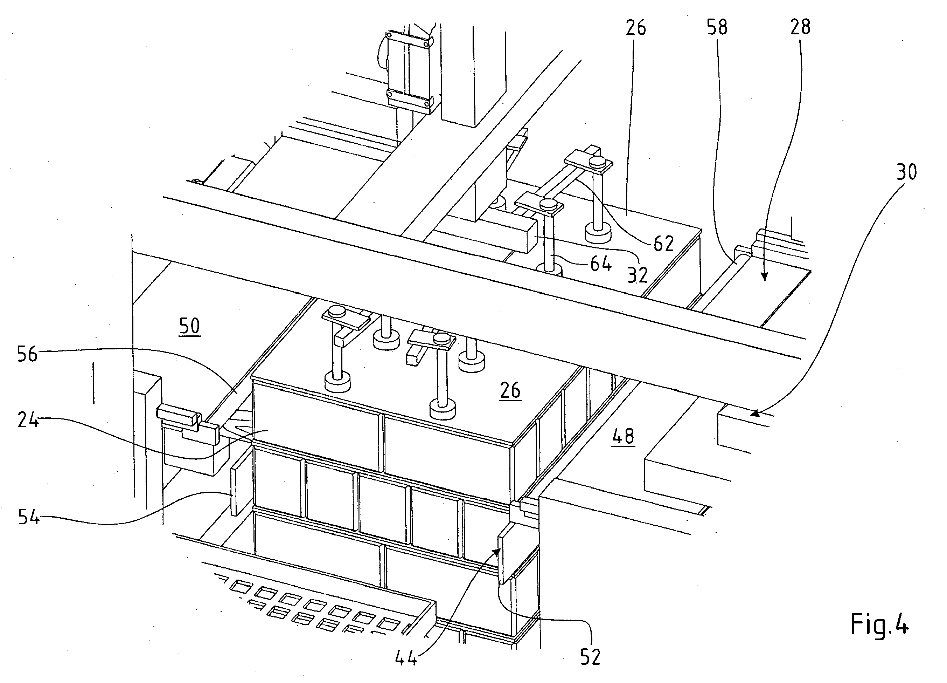

Figur 4 zeigt diesen Vorgang in vergrößerter Darstellung. Man erkennt deutlich die beiden Stempel 52, 54 der Lagenzentrierung 44, die seitlich an der unterhalb der anzuhebenden Lage 24 angeordneten Lage angreifen und diese zentrieren und halten. Der Vakuumheber 32 ist in Richtung seiner Saugposition auf die abzuhebende Zwischenlage 26 abgesenkt. In der Darstellung gemäß der Figur 4 sieht man auch deutlich den Aufbau der Entnahmeeinheit 28, die beidseitig an der Lage 24 angreift und jeweils 2 Reibwalzen 56, 58, hat, die stirnseitig an den beiden Tragböden 48, 50 angeordnet sind.

Die Ebene der Reibwalzen 56, 58 liegt dabei oberhalb der Wirkebene der Lagenzentrierung 44.

Der Vakuumheber 32 hat einen etwa X-förmig ausgebildeten Vakuumkopf 62, an dem die an der Zwischenlage 26 angreifenden Sauger 64 angeordnet sind. Diese sind an eine nicht dargestellte Vakuumpumpe angeschlossen, an die auch das Saugsystem der Vakuumentnahmeeinheit 30 angeschlossen ist.

In der Darstellung gemäß Figur 4 sieht man die in ihre Parkposition verfahrene Vakuumentnahmeeinheit 30.

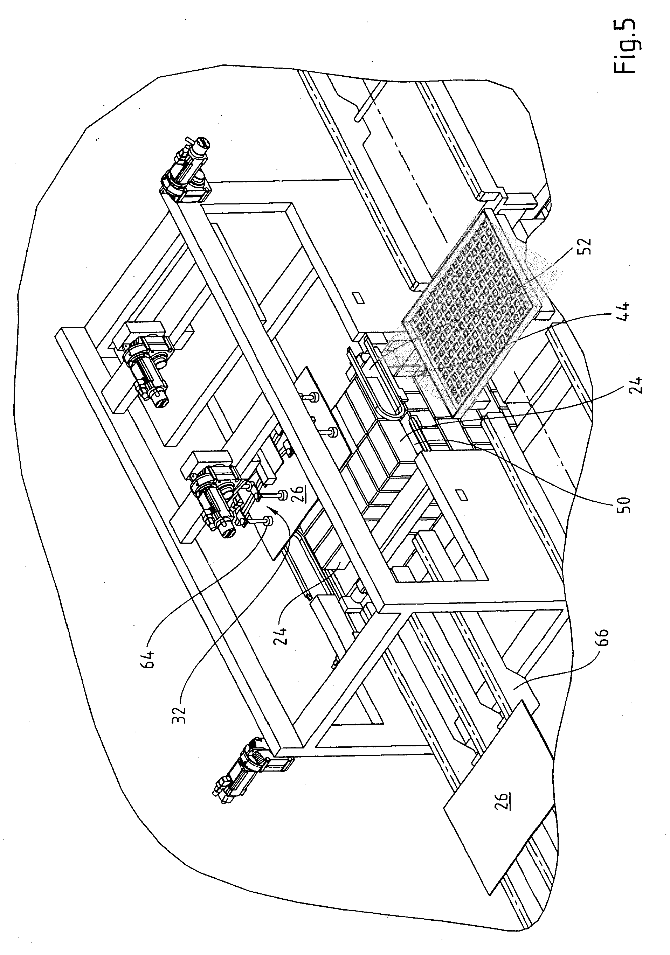

Figur 5 zeigt ein Ausführungsbeispiel, bei dem der Vakuumheber 32 über seine Sauger 64 die Zwischenlage 26 von der anzuhebenden Lage 24 angehoben hat. Bei dieser Variante wird allerdings die Zwischenlage 26 nicht zu einem Zwischenlagenspeicher 34 verbracht, sondern über eine Fördereinrichtung 66 abgeführt. Diese kann beispielsweise zur Entsorgung der Zwischenlagen in der unten liegenden Ebene 4 enden.

Gleichzeitig mit dem Abnehmen der Zwischenlage 26 wird bei dem in Figur 3 und 4 dargestellten Verfahrensschritt die Entnahmeeinheit 28 in ihre Wirkposition gebracht, in der die beiden Reibwalzen 56, 58 seitlich an der anzuhebenden Lage 24 angreifen und diese "Aufrollen". D. h., die Drehrichtung der beiden Reibwalzen 56, 58 ist so gewählt, dass die Lage 24 angehoben wird, die beiden Tragböden 48, 50 fahren dann mit den Reibwalzen 56, 58 gemäß der Darstellung in Figur 5 in die Trennebene zwischen der angehobenen Lage 24 und der über die Lagenzentrierung 44 gehaltene Lage ein, so dass die angehobene Lage 24 abgestützt ist.

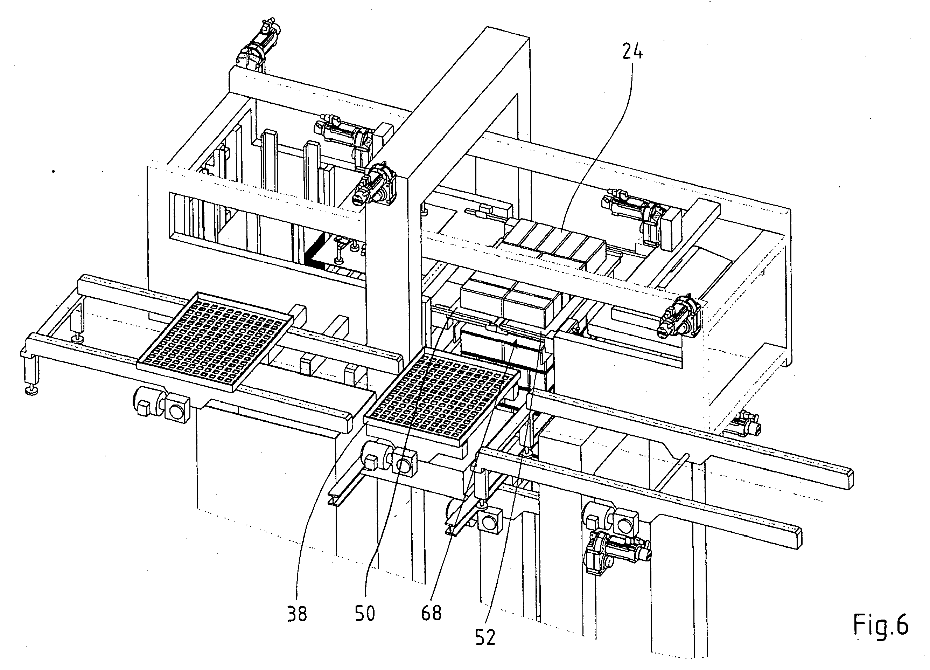

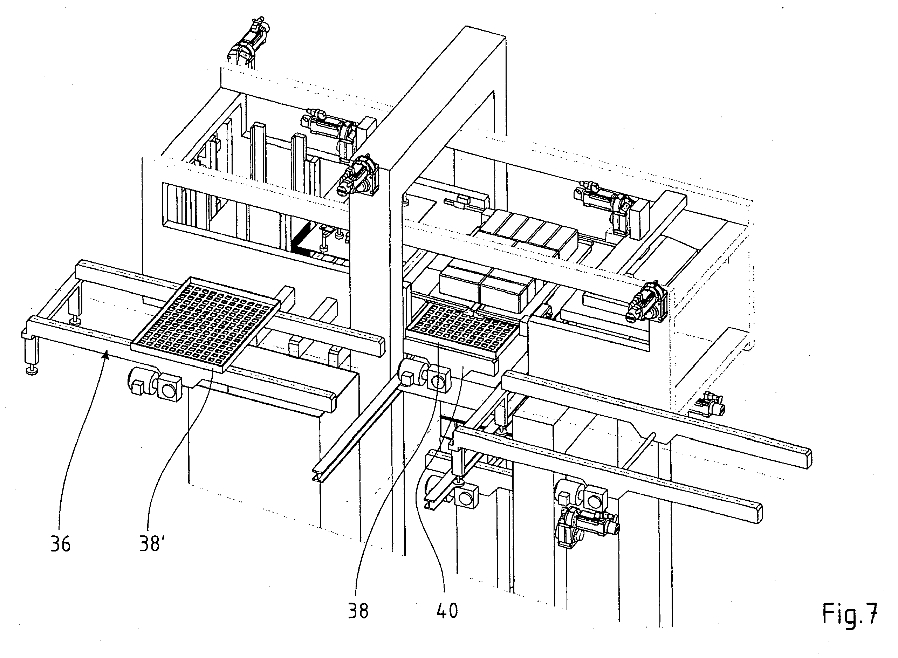

In einem folgenden Verfahrensschritt wird dann die Lagenzentrierung 44 geöffnet (siehe Figuren 5 und 6) und dann die Palette 6 mit den darauf angeordneten verbleibenden Lagen mittels des Palettenliftes 12 abgesenkt (Figur 6). In den sich auftuenden Raum 68 wird dann gemäß Figur 7 der Verschiebewagen 40 mit dem darauf angeordneten Kundentray 48 eingefahren und das nächste Kundentray 38' über die Entladestation 36 in die Warteposition verfahren.

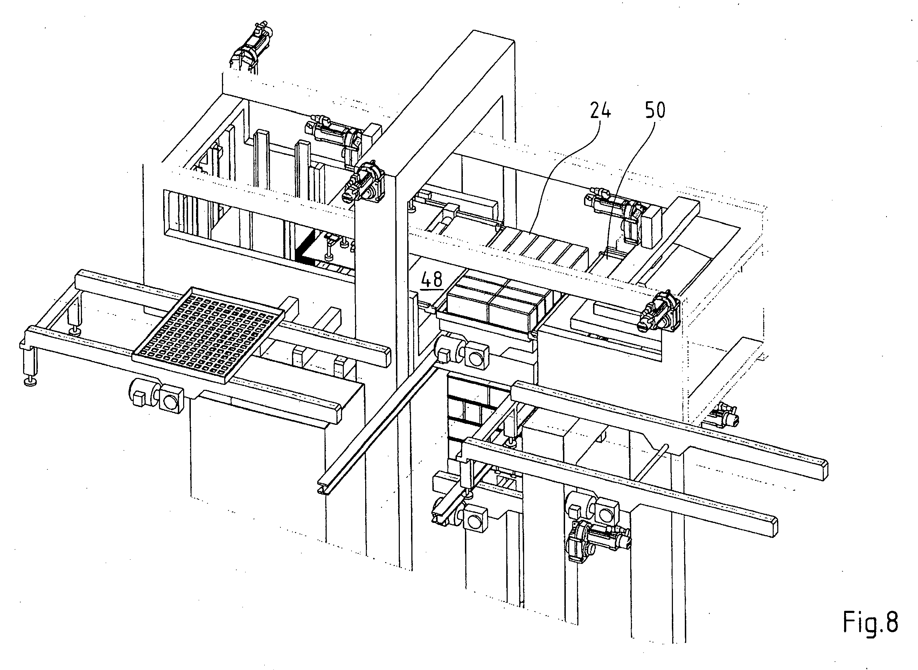

In dem in Figur 8 dargestellten Schritt werden dann die beiden Tragböden 48, 50 seitlich herausgefahren und die entpalettierte Lage 24 auf das Kundentray 38 abgelegt.

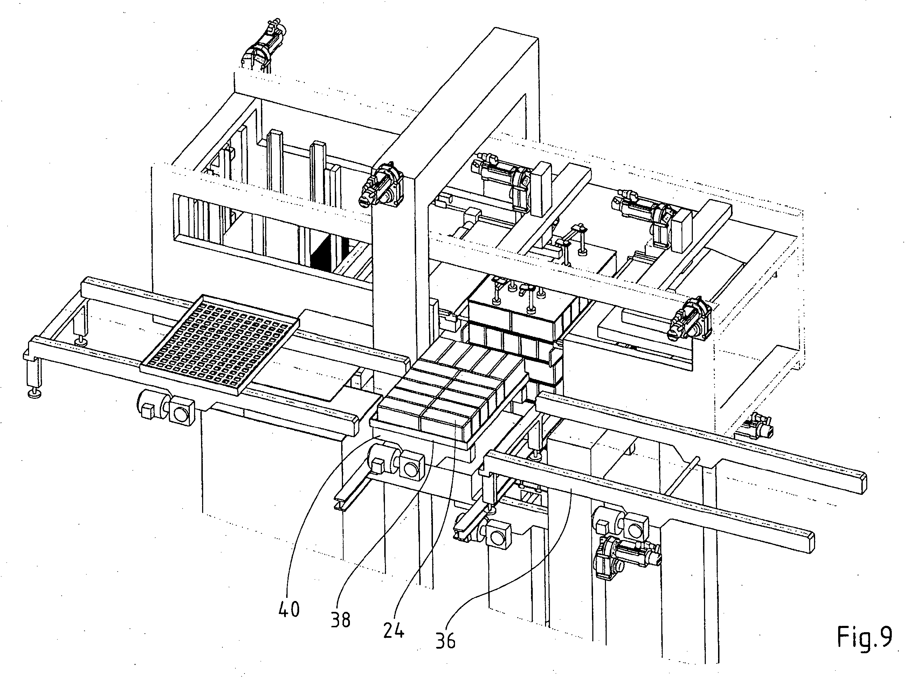

Dieses wird dann gemäß Figur 9 mittels des Verschiebewagens 40 aus dem Abhebebereich herausgefahren und an die Entladestation 36 übergeben und beispielsweise zum Hochregal gefördert.

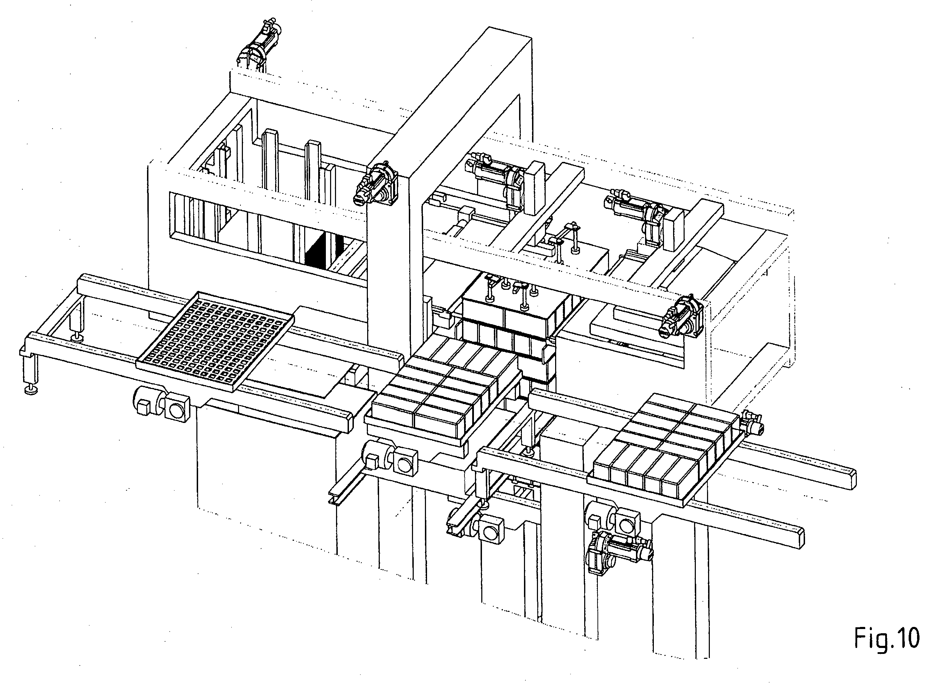

Der vorbeschriebene Vorgang wiederholt sich so lange, bis die komplette Vollpalette entleert (entpalettiert) ist (siehe Figur 10). Anschließend fährt der Palettenlift 12 in seine Ausgangsposition in die untere Ebene 4, so dass die Leerpalette über ein in Figur 1 angedeutetes Transportsystem 70 einem Palettenmagazin oder dergleichen zugeführt werden kann.

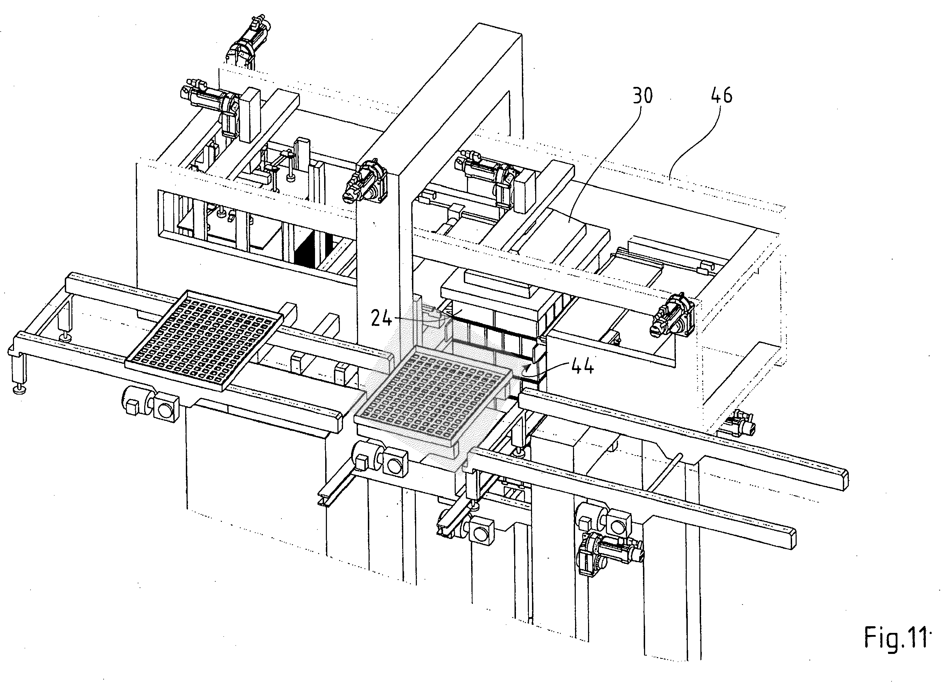

Die Entpalettierung mittels der reibschlüssig wirksamen Entnahmeeinheit wird vorzugsweise bei vergleichsweise schweren, stabilen Produkten angewendet. Beispielsweise bei leichten oder instabilen Produkten wird zum Entpalettieren die Vakuumentnahmeeinheit 30 verwendet. Die Zuführung der Vollpalette in den Abhebebereich erfolgt gleich wie beim zuvor beschriebenen Ausführungsbeispiel. Nach dem bereits beschriebenen Abheben der Zwischenlage 24 wird dann gemäß Figur 11 die Lagenzentrierung 44 geschlossen, um die unterhalb der anzuhebenden Lage 24 angeordnete Lage zu fixieren. Darüber hinaus wird über die Parallelführung 46 die Vakuumentnahmeeinheit 30 über die Lage 24 verfahren. Die Vakuumentnahmeeinheit 30 wird dann zur Aufnahme der Produkte der Lage 24 abgesenkt und durch ein integriertes Vertikalhubsystem die Lage 24 um etwa 100mm angehoben.

Über die beiden mit einfahrenden Tragböden 48, 50 sind die Produkte 24 gegen Abfallen gesichert, so dass eine Anlagestörung aufgrund herabfallender Produkte nahezu ausgeschlossen ist. Dabei werden die beiden Reibwalzen 56, 58 mitgefahren, diese sind jedoch bei Verwendung der Vakuumentnahmeeinheit nicht angetrieben.

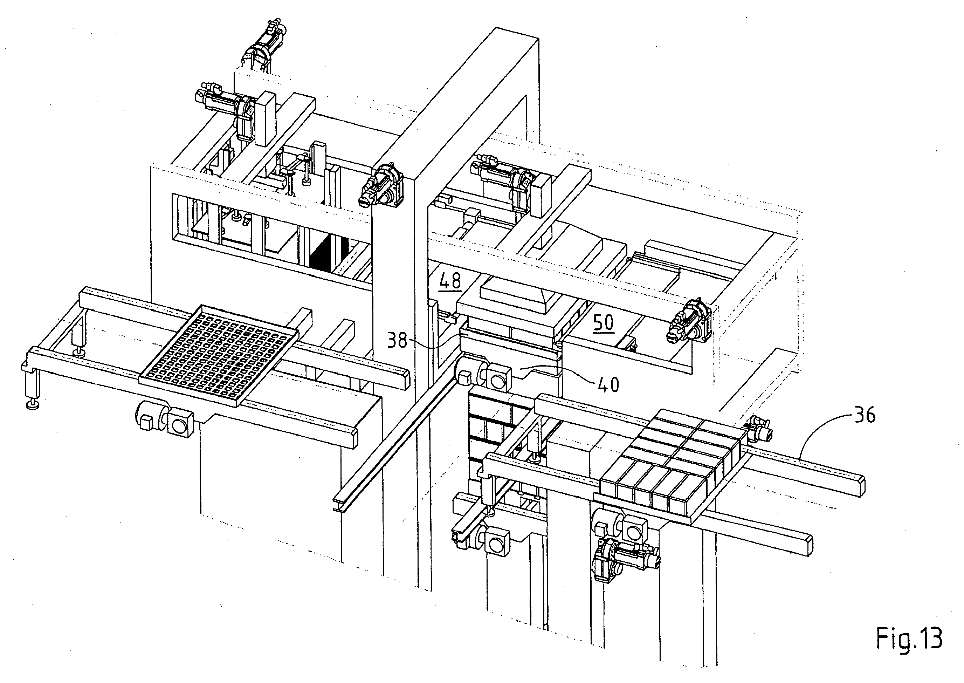

In einem folgenden Verfahrensschritt öffnet sich die Lagenzentrierung 44 und die auf der Palette 6 angeordneten restlichen Lagen werden über den Palettenlift 12 abgesenkt und dann in der vorbeschriebenen Weise gemäß Figur 13 in den sich ergebenden Raum 68 das Kundentray 38 über den Verschiebbewagen 40 eingefahren und gleichzeitig die beiden Tragböden 48, 50 auseinandergefahren. Über das Vakuumgreifsystem der Vakuumentnahmeeinheit wird die Lage 24 dann gemäß Figur 13 auf dem Kundentray 38 abgelegt und dann durch Verfahren des Verschiebewagens 40 an die Entladestation 36 übergeben und zur Zwischenlagerung, beispielsweise zum Hochregal gefördert.

Über das erfindungsgemäße Entpalettiersystem können praktisch alle auf dem Markt befindlichen Verpackungsarten und Produkte im Bereich Getränke-, Lebensmittel- und chemische Industrie vollautomatisch verarbeitet werden, wobei beispielsweise die Abtastung der Trennebene zwischen den Lagen 24 über geeignete Sensoren, beispielsweise über Kameras erfolgen kann, so dass über den Palettenlift 12 und die die Lagenzentrierung 44 das Einfahren der Entnahmeeinheiten (reibschlüssig wirkend, per Vakuum wirkend oder rein mechanisch durch Form- oder Kraftschluss) sehr präzise gesteuert werden kann. Das System hat des Weiteren den Vorteil, dass durch den Einsatz der Rundumzentrierung beim Zuführen der Vollpalette ein äußerst schonender Umgang mit dem zu verarbeitenden Produkt erfolgt. Dadurch ist auch eine vollautomatische Verarbeitung von beispielsweise beim Transport mit dem LKW verschobenen Paletten störungsfrei sichergestellt. Selbstverständlich können alternativ oder zusätzlich noch weitere Greifsysteme in das erfindungsgemäße Entladesystem integriert werden und über die Steuereinheit 42 angesteuert werden. Prinzipiell ist es auch möglich, mit dem Entpalettiersystem Mischpaletten zu entpalettieren, da über geeignete Sensoren die Produktart erfasst und dann über die Steuereinheit die geeignete Entnahmeeinheit ausgewählt wird. In Abhängigkeit von der Produktart und der Palettenstruktur werden auch die Vorzentriereinheit 10 und die Lagenzentrierung 44 angesteuert.

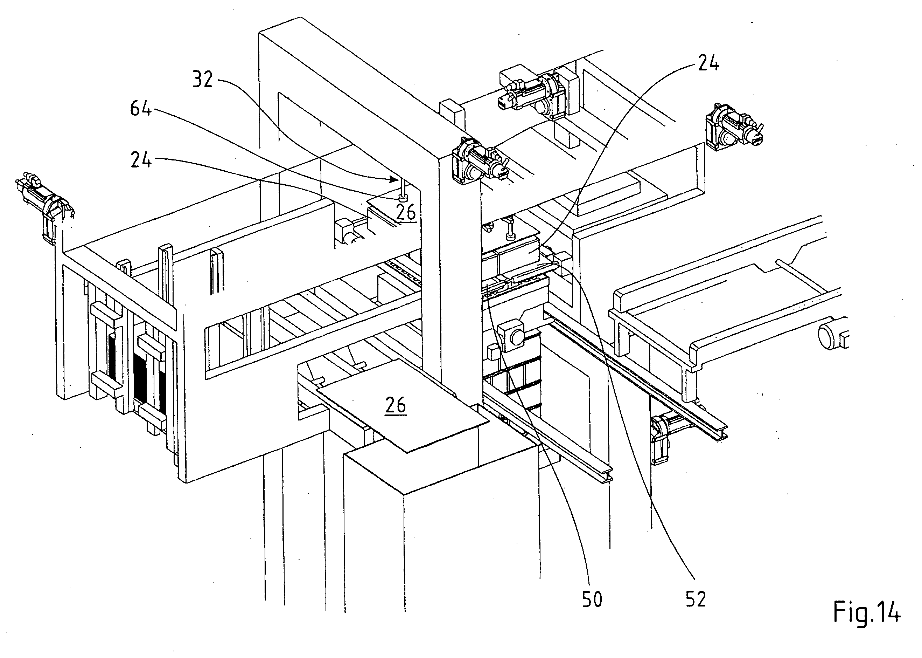

Figur 14 zeigt eine Variante des in Figur 5 dargestellten Ausführungsbeispiels. Bei letzterem wird die Zwischenlage 26 nach links, etwa parallel zur Verfahrrichtung der Kundentrays abgeführt. Figur 14 zeigt eine Variante, bei der die Zwischenlage 26 unterhalb der Führungsbahn für die Verschiebewagen 40 nach vorne, d. h., in etwa parallel zu der Richtung, in der die Lage 24 auf das Kundentray 38 verschoben wird ausgegeben und dann entsorgt und/oder einer weiteren Verwendung zugeführt. In diesem Fall kann auf den Zwischenlagerspeicher 34 verzichtet werden. Das Abführen der Zwischenlage 26 erfolgt dann beispielsweise über ein sogenanntes Trash-Band (nicht dargestellt in Figur 14).

Wie bereits erwähnt, kann anstelle der Entnahmeeinheit 28 mit zwei Reibwalzen 56, 58 die eingangs beschriebene "Messerkante" verwendet werden. Dabei umschlingt ein umlaufendes Band eine Umlenkeinrichtung, die - ähnlich wie beim Stand der Technik - durch Umlenkrollen oder, in bevorzugter Weise, durch ein Umlenkprofil ausgebildet ist. Durch dieses Umlenkprofil wird die Aufrollkante deutlich stabilisiert, so dass die Aufrollfunktion gegenüber einer Variante mit Umlenkrolle verbessert ist.

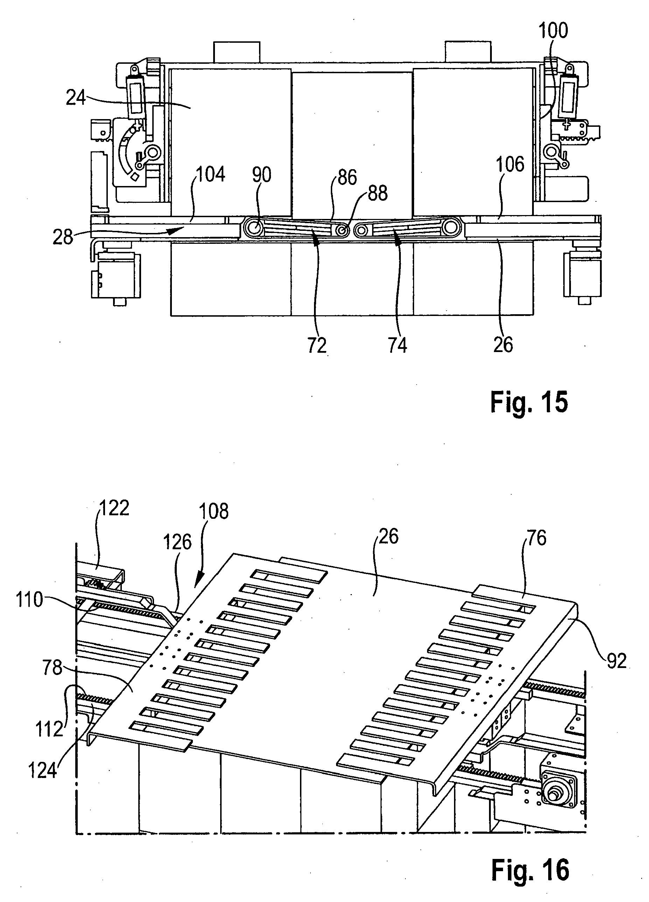

Ein derartiges Ausführungsbeispiel wird anhand der Figuren 15 bis 17 erläutert. Figur 15 zeigt eine Teildarstellung des erfindungsgemäßen Entpalettiersystems in einem Zustand, in dem die abzunehmende Lage 24 durch Einfahren der Entnahmeeinheit 28 von dem sonstigen, auf der Palette gestapelten Lagen abgehoben ist. Diese Entnahmeeinheit 28 ist mit zwei sogenannten keilförmigen "Messerkanten" 72, 74 ausgeführt, die zum Anheben beidseitig unter die Lage 24 eingefahren werden. Dabei kann die Lage 24 über geeignete Niederhalter, beispielsweise eine Mattenkette stabilisiert werden.

Nach diesem Anheben wird die Quellpalette abgesenkt und das vorzentrierte Kundentray eingefahren oder aber die vereinzelte Lage 24 nach außen auf das Kundentray 38 ausgefahren.

Um ein Mitanheben der Zwischenlage 26 von der auf der Quellpalette zurückbleibenden Lage zu verhindern, können gemäß Figur 16 Niederhalter 76, 78 vorgesehen sein, die in Anlage an diese Lage gebracht werden, so dass diese auf der Quellpalette verbleibt. Diese Niederhalter 76, 78 sind vorzugsweise synchron mit der Quellpalette verfahrebar.

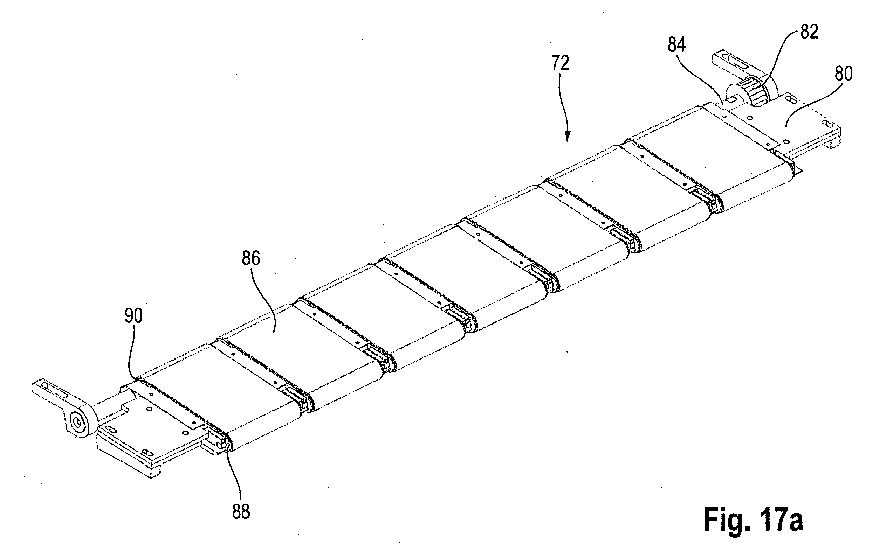

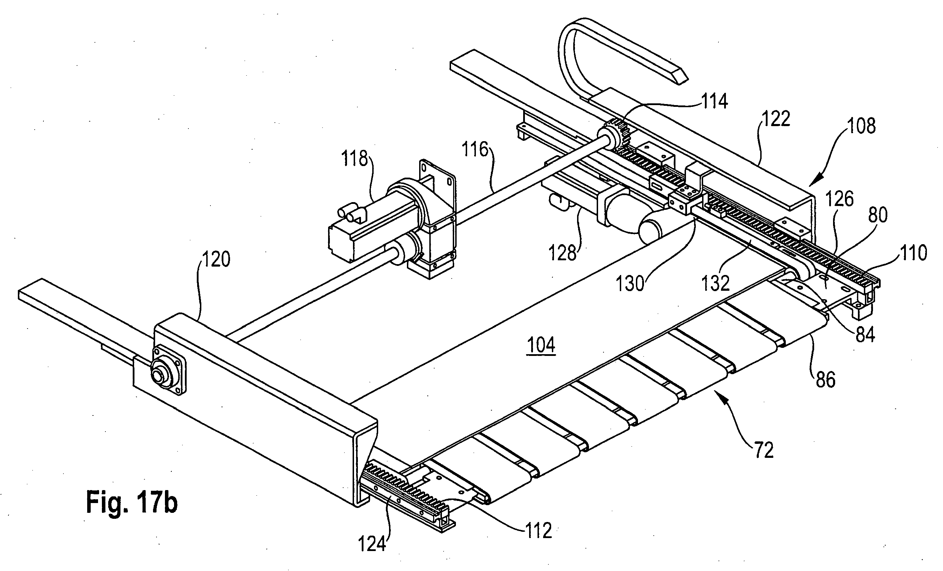

Figur 17 a zeigt eine Einzeldarstellung der Messerkante 72. Diese hat demgemäß einen nur teilweise dargestellten Tragrahmen 80 (siehe Figur 17b), an dem ein Antriebsrad 82 mit einer Antriebswelle 84 gelagert ist, über die eine Vielzahl von zahnriemenartigen Bändern 86 angetrieben werden, die auf dem Tragrahmen 80 gelagert sind. Beim dargestellten Ausführungsbeispiel sind insgesamt sieben Bänder 86 nebeneinanderliegend angeordnet. An den aufeinander zuweisenden Stirnflächen der Messerkanten 72, 74 (Figur 15) sind jeweils Umlenkrollen 88 ausgebildet, deren Durchmesser gemäß der Darstellung in Figur 15 etwas kleiner ist als der Durchmesser von Antriebsritzeln 90, die drehfest mit der Antriebswelle 84 verbunden sind. Die Umlenkrollen 88 sind nicht angetrieben sondern werden lediglich mitgeschleppt. Anstelle der Umlenkrollen 88 kann, wie erläutert, auch eine feste Umlenkung vorgesehen sein.

Durch den segment- oder kassettenförmigen Aufbau mit einer Vielzahl von Bändern 86 kann eine einfache Anpassung an unterschiedliche Güter oder an unterschiedliche Breiten der Quellpalette 6 erfolgen, so dass das Entpalettiersystem 1 sehr schnell auf unterschiedliche Anforderungen umgerüstet werden kann. Wie erläutert, sind die Messerkanten 72, 74 aufeinander zu verfahrbar und in der Höhe (vertikal in Figur 15) verfahrbar in einem Führungsrahmen gelagert, um in die jeweilige Anhebeposition verfahren werden zu können.

Durch das Einfahren der Messerkanten 72, 74 unter die abzunehmende Lage 24 werden, wie in Figur 15 dargestellt, zumindest die außen liegenden Kartons/Produkte auf einer fluchtend zu den Rückseiten der Messerkanten 72, 74 angeordnete Tragplatte 104, 106 abgestützt, so dass die gesamte Lage 24 entweder durch die Tragplatten 104, 106 oder die Bänder 86 der Messerkanten 72, 74 abgestützt und somit weitestgehend relativ positioniert ist.

Der keilförmige Querschnitt der Messerkanten 72, 74 erleichtert das Einführen und Anheben in den Bereich zwischen zwei benachbarte Lagen. Das Material des Bandes 36 ist dabei so gewählt, dass Güter unterschiedlichster Oberflächenqualität und Materialien angehoben werden können.

Figur 17b zeigt die Entnahmeeinheit mit der an Hand der Figur 17 a erläuterten Messerkante 72. Die andere Messerkante 74 ist entsprechend ausgebildet.

Gemäß der Darstellung in der Figur 17b ist der die Bänder 86 tragende Tragrahmen 80 beidseitig an einer Linearführung 108 geführt, so dass die Messerkante 72 unter die Lage 24 eingefahren werden kann. Der Tragrahmen 80 hat zwei Zahnstangen 110, 112, die jeweils mit einem Vorschubritzel 114 kämmen, von denen in der Darstellung gemäß der Figur 17b lediglich eines sichtbar ist. Beide Vorschubritzel 114 sind mit einer Triebwelle 116 eines ortsfest montierten Vorschubmotors 118 verbunden. Die Endabschnitte der Triebwelle 116 sind in zwei Führungskonsolen 120, 122 gelagert, die entlang den Führungsschienen 124, 126 des Tragrahmens 80 geführt sind. Durch Ansteuern des Vorschubmotors 118 werden die beiden Vorschubritzel 114 gedreht, so dass die Zahnstangen 110, 112 und damit der gesamte Tragrahmen 80 in der jeweiligen Vorschubrichtung verstellt wird.

Der Antrieb, der anhand 17 a erläuterten Bänder 86, erfolgt über einen am Tragrahmen 80 gelagerten Bandmotor 128, dessen Motorritzel 130 über einen Zahnriemen 132 mit dem in Figur 17 a dargestellten Antriebsrad 82 der Antriebswelle 84 verbunden ist. Bei Ansteuerung des Bandmotors 128 werden dementsprechend alle Bänder 86 über die auf der Antriebswelle 84 gelagerten Antriebsritzel 90 angetrieben.

Jede Messerkante der Entnahmeeinheit ist des Weiteren mit der bereits beschriebenen Tragplatte 104, 106 ausgeführt, die ebenfalls entlang der Linearführung 108 verschiebbar ist und, wie in Figur 15 dargestellt ist, unter die zu vereinzelnde Lage 24 verfahrbar ist. Am Tragrahmen 80 oder der Linearführung 108 kann auch der Niederhalter 78 beziehungsweise 76 gelagert sein.

Die Oberfläche der Bänder 86 kann an das zu vereinzelnde Gut angepasst werden. So können die Bänder mit einer Noppenstruktur, aus einem Belag mit hohem Reibkoeffizienten, aus einem vergleichsweise weichen Belag, einem Belag mit Borsten oder dergleichen ausgebildet sein, um eine optimal Vereinzelung zu gewährleisten. Aufgrund des kassettenförmigen Aufbaus können die einzelnen Bandsegmente auf sehr einfache Weise ausgewechselt werden, um eine derartige Anpassung zu ermöglichen.

Die Entnahmeeinheit mit den beiden Messerkanten 72, 74 ist ein wichtiges Bauelement des Entpalettiersystems 1.

Die Anmelderin behält sich vor, auf die Konstruktion der anhand der Figuren 15 bis 17a, b erläuterten Entnahmeeinheit 28 mit den beiden Messerkanten 72, 74 einen eigenen, unabhängigen Anspruch zu richten.

Beim dargestellten Ausführungsbeispiel sind die beiden Niederhalter 76, 78 kammförmig mit herunter gebogenen Seitenwangen 92 ausgeführt, selbstverständlich sind auch andere geeignete Niederhalter einsetzbar.

Die als Riemenkassette ausgebildeten Bänder 86 mit den jeweiligen Antriebsritzeln 90 und Umlenkrollen 88 können auch modular ausgebildet sein, so dass diese Kassetten auf einfache Weise auswechselbar sind.

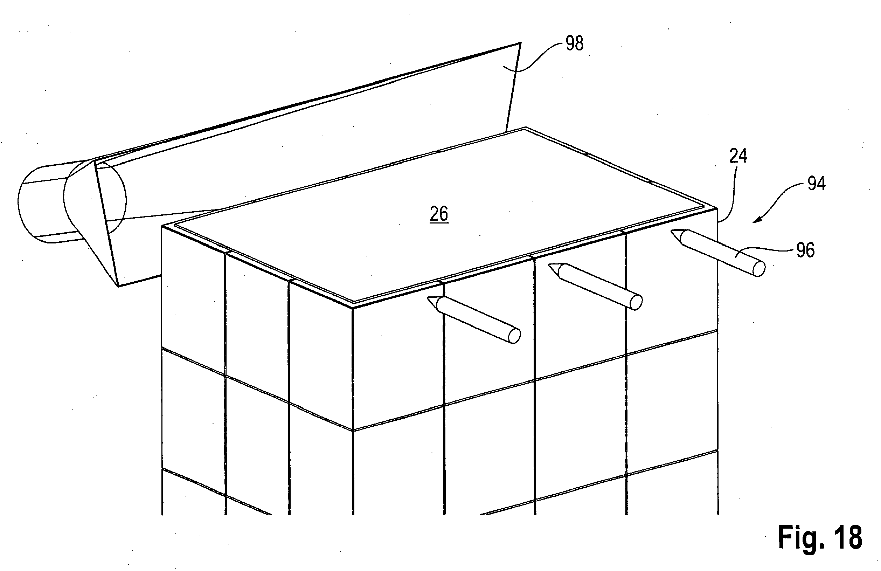

Bei bestimmten Materialien für die Zwischenlage 26 kann es vorkommen, dass diese nicht mittels des Vakuumhebers 32 abgehoben werden können. Für diesen Fall kann zusätzlich oder alternativ eine Abblaseinrichtung 94 vorgesehen werden, wie sie in Figur 18 dargestellt ist. Dem gemäß hat die Abblaseinrichtung 94 zumindest eine Pressluftdüse 96, die mit Bezug zur abzunehmenden Zwischenlage 26 ausgerichtet sind. Dabei sind eine Vielzahl von Pressluftdüsen 96 nebeneinanderliegend angeordnet und mit ihren Mündungen auf den Trennspalt gerichtet. Durch einen oder mehrere Pressluftstöße, die über eine Pressluftversorgüng und die Maschinensteuerung gesteuert werden, kann die Zwischenlage 26 von der abzunehmenden Lage 24 abgehoben und dann über einen Saugkopf 98 abgesaugt und zum genannten Trash-Band geführt werden.

Diese Variante bietet sich bei sehr instabilen oder lufdurchlässigen Zwischenlagen an.

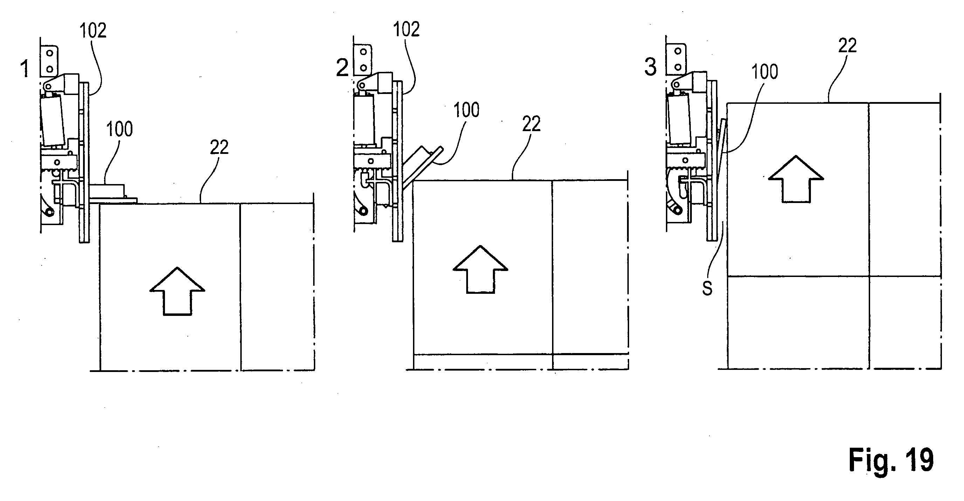

Anhand Figur 19 wird eine Variante erläutert, mit der die korrekte Position der Quellpalette 6 nach dem Anheben mittels des Palettenlifts 12 kontrolliert wird. Bei diesem Ausführungsbeispiel hat das Entpalettiersystem 1 beispielsweise auf beiden Seiten des Produktstapels 22 eine Abtastklappe 100, die gelenkig an einem Seitenanschlag 102 geführt ist. Beim Anheben mittels des Palettenliftes läuft die obere Lage auf die rechtwinklig zum Seitenanschlag 102 auskragende Abtastklappe 100 auf (siehe "1" in Figur 19). Beim weiteren Anheben wird die Abstastklappe 100 verschwenkt, so dass aus dem Schwenkwinkel ein zuverlässiger Hinweis auf die Position des Produktstapels 22 abgeleitet werden kann. Beim weiteren Hochfahren des Produktstapels 22 fährt die vollständig ausgelenkte Abtastklappe 100 in den Spalt S zwischen dem Seitenanschlag 102 und dem Produktstapel 22 ein, so dass die Relativposition zur vorbeschriebenen Entnahmeeinheit 28 sichergestellt ist. Diese Abtastklappen sind bündig in die Lagenzentrierung des erfindungsgemäßen Entpalettiersystems integriert.

Das erfindungsgemäße Endpalettiersystem bietet dem Anwender die Möglichkeit, pro Schicht bei einer Leistung von etwa 300 bis 400 Lagen/Stunde mit einer Bedienperson vollautomatisch einen störungsfreien Entpalettiervorgang sicherzustellen.

Offenbart ist ein Entpalettiersystem, das eine vollautomatische Entpalettierung ermöglicht. Offenbart ist des Weiteren eine Entnahmeeinheit mit zumindest einer "Messerkante". Letztere kann ein umlaufendes Band haben, das ein Antriebsritzel und eine Umlenkung umschlingt.

### Bezugszeichenliste:

- 1: Entpalettiersystem
- 2: Ebene
- 4: Ebene
- 6: Palette
- 8: Palettentransporteinrichtung
- 30: Vorzentriereinheit
- 12: Palettenlift
- 14: Vertikalkonsole
- 16: Vertikalkonsole
- 18: Palettenträger
- 20: Servoantrieb
- 22: Produktstapel
- 24: Lage
- 26: Zwischenlage
- 28: Entnahmeeinheit
- 30: Vakuumentnahmeeinheit
- 32: Vakuumheber
- 34: Zwischenlagenspeicher
- 36: Entladestation
- 38: Kundentray
- 40: Verschiebewagen
- 42: Steuereinheit
- 44: Lagenzentrierung
- 46: Parallelführung
- 48: Tragboden
- 50: Tragboden
- 52: Stempel
- 54: Stempel
- 56: Reibwalze
- 58: Reibwalze
- 60: Tragarme
- 64: Sauger
- 66: Fördereinrichtung
- 38: Raum
- 70: Transportsystem
- 72: Messerkante
- 74: Messerkante
- 76: Niederhalter
- 78: Niederhalter
- 80: Tragrahmen
- 82: Antriebsritzel
- 84: Antriebswelle
- 86: Band
- 88: Umlenkrolle
- 90: Antriebsritzel
- 92: Umfangsrand
- 94: Abblaseinrichtung
- 96: Pressluftdüse
- 98: Saugkopf
- 100: Abtastklappe
- 102: Seitenanschlag
- 104: Tragplatte
- 106: Tragplatte
- 108: Linearführung
- 110: Zahnstange
- 112: Zahnstange
- 114: Vorschubritzel
- 116: Triebwelle
- 118: Vorschubmotor
- 120: Führungskonsole
- 122: Führungskonsole
- 124: Führungsschiene
- 126: Führungsschiene
- 128: Bandmotor
- 130: Motorritzel
- 132: Zahnriemen

## Patentansprüche

1. Entpalettiersystem für eine Vielzahl von auf einer Palette lagenweise gestapelten Produkten, mit einer Vakuumentnahmeeinheit (30), über die eine Lage (24) vom Produktstapel (22) abhebbar ist und einer reibschlüssig wirkende Entnahmeeinheit (28), über die an eine Lage (24) seitlich ein Reibelement ansetzbar ist, um die Lage (24) vom Produktstapel (22) abzuheben, wobei zumindest ein Tragboden (48, 50) einfahrbar ist, **gekennzeichnet durch** eine Steuereinheit (42) die so ausgelegt ist, dass die Vakuumentnahmeeinheit (30) und die reibschlüssig wirkende Entnahmeeinheit (28) alternativ oder gleichzeitig angesteuert werden, so dass je nach Produkteigenschaft entweder das reibschlüssig wirksame Entnahmesystem (28) oder die Vakuumentnahmeeinheit (30) oder beide zusammen verwendet werden, um eine Produktlage (24) vom Stapel (22) abzuheben.

2. Entpalettiersystem, nach Patentanspruch 1, mit einer Vorzentriereinheit (10), über die der entfolierte Produktstapel (22) lagezentrierbar ist, wobei die Steuereinheit (42) derart ausgelegt ist, um die Entnahmeeinheit (28) die Vakuumentnahmeeinheit (30) und die Vorzentriereinheit (10) zu steuern.

3. Entpalettiersystem nach einem der vorhergehenden Patentansprüche, mit einem Heber zum Abnehmen einer Zwischen- oder Decklage (26) vom Produktstapel (22) und zum Verbringen in eine Ausgabestation und/oder mit einer Nieder-/Rückhaltevorrichtung zum Lagefixieren der Zwischen- oder Decklage (26) auf der Lage, die unterhalb der abgehobenen Lage (24) angeordnet ist.

4. Entpalettiersystem nach Patentanspruch 3, mit einem Zwischenlagenspeicher (34).

5. Entpalettiersystem nach Patentanspruch 3 oder 4, wobei der Heber ein Vakuumheber (32) ist.

6. Entpalettiersystem nach einem der vorhergehenden Patentansprüche, mit einem Palettenlift (12), über den die Palette (6) förderbar ist, und der von der Steuereinheit (42) ansteuerbar ist.

7. Entpalettiersystem nach Patentanspruch (6), wobei der Palettenlift (12) Stützstempel hat, die den Produktstapel (22) und/oder die Palette (6) abstützen.

8. Entpalettiersystem nach Patentanspruch 8, wobei die Steuereinheit (42) ausgelegt ist, um die Haltekraft der Lagenzentrierung produktabhängig zu steuern.

9. Entpalettiersystem nach einem der vorhergehenden Patentansprüche, mit einer Entladestation (36) zum Zuführen eines leeren Kundentrays (38), auf dem die angehobene Lage (24) ablegbar ist.

10. Entpalettiersystem nach Patentanspruch 5 oder einem auf Patentanspruch 5 bezogenen Ansprüche, wobei die Entnahmeeinheit (28), die Vakuumentnahmeeinheit (30) und/oder der Heber oberhalb der Lagenzentriereinheit (44) angeordnet sind.

11. Entpalettiersystem nach einem der vorhergehenden Patentansprüche, wobei die Entnahmeeinheit (28) unterhalb der Vakuumentnahmeeinheit (30) und/oder unterhalb des Hebers angeordnet ist.

12. Entpalettiersystem nach einem der vorhergehenden Patentansprüche, wobei eine Vakuumentnahmeeinheit (30) und ein Heber parallel verfahrbar angeordnet sind.

13. Entpalettiersystem nach einem der vorhergehenden Patentansprüche, wobei das Reibelement eine Reibwalze (56) oder eine Messerkante ist, die reibschlüssig seitlich an der Lage (24) angreift.

14. Entpalettiersystem nach Patentanspruch 13, wobei an der Lage (24) beidseitig Reibelemente angreifen und zwei Tragbodensegmente einfahrbar sind.

15. Entpalettiersystem nach einem der vorhergehenden Patentansprüche, mit Sensoren zur Erfassung einer Trennebene zwischen der anzuhebenden Lage (24) und der nächsten Lage des Produktstapels (22).

16. Entpalettiersystem nach Anspruch 13 oder 14, wobei die Entnahmeeinheit (28) zumindest ein Band (86) hat, das eine Umlenkung und ein Antriebsrad, vorzugsweise ein Antriebsritzel (90) umschlingt, wobei das Band (86) reib- oder formschlüssig mit dem Antriebsrad in Wirkeingriff steht.

17. Entpalettiersystem nach Patentanspruch 16, wobei das Band (86) als Zahnriemenprofil ausgeführt ist.

## Claims

1. Depalletizing system for a plurality of products stacked on a pallet in layers, comprising a vacuum removal unit (30) via which a layer (24) can be lifted from the product stack (22) and a frictionally-engaging removal unit (28) via which a friction element is laterally applicable to a layer (24) to lift the layer (24) from the product stack (22), wherein at least one support base (48, 50) can be run in, **characterized by** a control unit (42) which is configured such that the vacuum removal unit (30) and the frictionally-engaging removal unit (28) are driven alternatively or synchronously, such that invention either the frictionally-engaging removal unit (28) or the vacuum removal unit (30) is used, or both are used together to lift a product layer (24) from the stack (22) depending on the product's properties.

2. Depalletizing system according to patent claim1, comprising a pre-centering unit (10), via which the product stack (22) freed from foil can be positionally centered, wherein the control unit (42) is configured to control the removal unit (28), the vacuum removal unit (30) and the pre-centering unit (10).

3. Depalletizing system according to one of the preceding patent claims comprising a lifter for taking off an intermediate or top layer (26) from the product stack (22) and for taking it to an output station, and / or with a holding-down / retaining device for positionally fixing the intermediate or top layer (26) on the layer which is arranged underneath the lifted layer (24).

4. Depalletizing system according to patent claim 3, comprising an intermediate-layer storage (34).

5. Depalletizing system according to patent claim 3 or 4, wherein the lifter is a vacuum lifter (32).

6. Depalletizing system according to one of the preceding patent claims, comprising a pallet lift (12), via which the pallet (6) is conveyable, and which is controllable by the control unit (42).

7. Depalletizing system according to patent claim 6, wherein the pallet lift (12) comprises support posts, which support the product stack (22) and / or the pallet (6).

8. Depalletizing system according to patent claim 8, wherein the control unit (42) is configured to control the holding force of the layer centering depending on the product.

9. Depalletizing system according to one of the preceding patent claims, comprising a discharging station (36) for supplying an empty customer tray (38) onto which the lifted layer (24) can be put down.

10. Depalletizing system according to patent claim 5 or a claim referring to patent claim 5, wherein the removal unit (28), the vacuum removal unit (30) and / or the lifter are arranged above the layer centering unit (44).

11. Depalletizing system according to one of the preceding patent claims, wherein the removal unit (28) is arranged below the vacuum removal unit (30) and / or below the lifter.

12. Depalletizing system according to one of the preceding patent claims, wherein a vacuum removal unit (30) and a lifter are movably arranged in parallel.

13. Depalletizing system according to one of the preceding patent claims, wherein the friction element is embodied as a friction roller (56) or a knife edge, which laterally seizes the layer (24) in a frictionally-engaged way.

14. Depalletizing system according to patent claim 13, wherein friction elements seize the layer (24) on both sides and two support base segments may be run in.

15. Depalletizing system according to one of the preceding patent claims, comprising sensors for detecting a separation level between the layer (24) to be lifted and the next layer of the product stack (22).

16. Depalletizing system according to patent claims 13 or 14, wherein the removal unit (28) comprises at least one belt (86), which wraps around a deflection and a drive gear, preferably a drive pinion (90), wherein the belt (86) is in operational engagement with the drive gear in a frictionally-engaged or form-fitted way.

17. Depalletizing system according to patent claim 16, wherein the belt (86) is embodied as a gear-belt profile.

## Revendications

1. Système de dépalettisation pour une pluralité de produits empilés par couches sur une palette, avec une unité de prélèvement sous vide (30), par laquelle une couche (24) peut être levée de la pile de produits (22) et une unité de prélèvement (28) agissant par frottement, par laquelle un élément de frottement peut être placé latéralement sur une couche (24) afin de lever la couche (24) de la pile de produits (22), au moins un fond porteur (48, 50) pouvant être rentré, **caractérisé par** une unité de commande (42) qui est conçue de sorte que l'unité de prélèvement sous vide (30) et l'unité de prélèvement (28) agissant par frottement soient commandées alternativement ou simultanément de sorte que selon la propriété du produit, le système de prélèvement (28) agissant par frottement ou l'unité de prélèvement sous vide (30) ou les deux soient utilisées ensemble afin de lever une couche de produit (24) de la pile (22).

2. Système de dépalettisation selon la revendication 1, avec une unité de précentrage (10), par laquelle la position de la pile de produits (22), de laquelle le film a été retiré, peut être centrée, l'unité de commande (42) étant conçue afin de commander l'unité de prélèvement (28), l'unité de prélèvement sous vide (30) et l'unité de précentrage (10).

3. Système de dépalettisation selon l'une quelconque des revendications précédentes, avec un élément de levage pour le retrait d'une couche intermédiaire ou de recouvrement (26) de la pile de produits (22) et pour le passage dans un poste de sortie et/ou avec un dispositif de suppression et de retenue pour la fixation de la position de la couche intermédiaire ou de recouvrement (26) sur la couche qui est agencée sous la couche levée (24).

4. Système de dépalettisation selon la revendication 3, avec un réservoir de couche intermédiaire (34).

5. Système de dépalettisation selon la revendication 3 ou 4, l'élément de levage étant un élément de levage sous vide (32).

6. Système de dépalettisation selon l'une quelconque des revendications précédentes, avec une table élévatrice (12), par laquelle la palette (6) peut être transportée, et qui peut être commandée par l'unité de commande (42).

7. Système de dépalettisation selon la revendication 6, la table élévatrice (12) présentant des piliers d'appui qui soutiennent la pile de produits (22) et/ou la palette (6).

8. Système de dépalettisation selon la revendication 8, l'unité de commande (42) étant conçue afin de commander en fonction du produit la force de retenue du centrage de position.

9. Système de dépalettisation selon l'une quelconque des revendications précédentes, avec un poste de déchargement (36) pour l'amenée d'un plateau client vide (38), sur lequel la couche levée (24) peut être déposée.

10. Système de dépalettisation selon la revendication 5 ou l'une quelconque des revendications liées à la revendication 5, l'unité de prélèvement (28), l'unité de prélèvement sous vide (30) et/ou l'élément de levage étant agencé au-dessus de l'unité de centrage de position (44).

11. Système de dépalettisation selon l'une quelconque des revendications précédentes, l'unité de prélèvement (28) étant agencée sous l'unité de prélèvement sous vide (30) et/ou sous l'élément de levage.

12. Système de dépalettisation selon l'une quelconque des revendications précédentes, une unité de prélèvement sous vide (30) et un élément de levage étant agencés de manière à pouvoir se déplacer parallèlement.

13. Système de dépalettisation selon l'une quelconque des revendications précédentes, l'élément de frottement étant un rouleau de frottement (56) ou une arête de lame qui agit par frottement latéralement sur la couche (24).

14. Système de dépalettisation selon la revendication 13, des éléments de frottement agissant de part et d'autre sur la couche (24) et deux segments de fond porteur étant rentrables.

15. Système de dépalettisation selon l'une quelconque des revendications précédentes, avec des capteurs pour la détection d'un plan de séparation entre la couche à lever (24) et la couche suivante de la pile de produits (22).

16. Système de dépalettisation selon la revendication 13 ou 14, l'unité de prélèvement (28) présentant au moins une bande (86) qui entoure un renvoi et une roue d'entraînement, de préférence un pignon d'entraînement (90), la bande (86) étant en engagement actif par frottement ou par complémentarité de formes avec la roue d'entraînement.

17. Système de dépalettisation selon la revendication 16, la bande (86) étant réalisée en tant que profil de courroie dentée.
